# EUROPÄISCHE PATENTSCHRIFT

(11) **EP 0 528 142 B1**
(45) Veröffentlichungstag und Bekanntmachung des Hinweises auf die Patenterteilung: **08.03.1995**
(21) Anmeldenummer: 92110812.2
(22) Anmeldetag: 26.06.1992
(51) Int. Cl.: B60N 3/00

(54) **Fahrzeugsitz**
Vehicle seat
Siège de véhicule

(30) Priorität: 09.08.1991 DE 4126427
(43) Veröffentlichungstag der Anmeldung: 24.02.1993
(73) Patentinhaber: MERCEDES-BENZ AG, 70327 Stuttgart (DE)
(72) Erfinder: Hienz, Johann, Dipl.-Ing., W-7030 Böblingen (DE); Kalt, Hans-Peter, Dipl.-Ing., W-7036 Schönaich (DE); Ruigroh van de Werve, Klaus, W-7032 Sindelfingen (DE)

(56) Entgegenhaltungen:
- EP-A- 0 071 817
- DE-A- 2 648 951
- DE-A- 2 816 601
- DE-A- 3 044 089
- GB-A- 2 051 566
- US-A- 3 049 374
- US-A- 3 588 172

## Beschreibung

Die Erfindung betrifft einen Fahrzeugsitz mit Sitzkissen und Rückenlehne und mit einem auf der Rückseite der Rückenlehne angeordneten Klapptisch gemäß dem Oberbegriff des Patentanspruchs 1.

Bei einem bekannten Fahrzeugsitz dieser Art (DE 30 44 089 A1) mit relativ zum Sitzkissen schwenkbarer Rückenlehne zwecks Einstellung des Öffnungswinkels zwischen Sitzkissen und Rückenlehne, bzw. der Neigungs- oder Anstellwinkels der Rückenlehne zur Vertikalen, ist die Schwenkachse des Klapptisches an der Rückenlehne gleichzeitig Anlenkachse eines doppelarmigen Hebels einer eine Führung für den Klapptisch bildenden Parallelogramm-Lenkerkonstruktion. Der eine Hebelarm ist Teil der Lenkerkonstruktion, und der andere Hebelarm bildet einen Anschlag des Klapptisches in dessen Gebrauchslage. Wird der Neigungswinkel der Rückenlehne verändert, so wird über die Lenkerkonstruktion dieser den Anschlag bildende Hebelarm so verstellt, daß der Klapptisch immer waagerecht ausgerichtet bleibt.

Bei einem ebenfalls bekannten Fahrzeugsitz (DE 26 48 951 B2) mit schwenkbarer Rückenlehne ist die Schwenkachse des Klapptisches an zwei im Querabstand voneinander in Längsrichtung der Rückenlehne sich erstreckenden hinteren Lenkern einer Parallelogrammabstützung festgelegt. Der Klapptisch weist hierzu zwei die Tischplatte aufnehmende Tragteile auf, die an den beiden hinteren Lenkern angelenkt sind und in Richtung der vorderen Lenker sich erstreckende Anschlagelemente tragen. In der Gebrauchslage des Klapptisches liegen diese Anschlagelemente an jeweils einem als Gegenschlag dienenden Bolzen an den vorderen Lenkern an. Aufgrund dieser von den vorderen und hinteren Lenkern gegebenen Parallelogrammabstützung liegt der Klapptisch unabhängig von der jeweils eingestellten Neigung der Rückenlehne in seiner Gebrauchslage immer horizontal.

Bei beiden Fahrzeugsitzen ist in der Gebrauchslage des Klapptisches keine Sicherung durch eine Verriegelung oder Verrastung gegeben, so daß der Klapptisch z.B. durch unbeabsichtigtes Anstoßen auf der Unterseite der Tischplatte in unerwünschter Weise sehr leicht bewegt werden kann. In der Nichtgebrauchslage muß ein gesonderter Haltemechanismus vorgesehen werden, der den Klapptisch in seiner Anklappstellung an der Rückseite der Rückenlehne hält.

Wird der Fahrzeugsitz mit feststehender Rückenlehne ausgeführt, so kann bei den vorstehend beschriebenen bekannten Klapptischkonstruktionen zwar die Klapptischabstützung an den Parallelogrammlenkern beibehalten werden, doch ist die Parallelogramm-Lenkerkonstruktion für diesen Zweck zu aufwendig und zu teuer, da ein einfacher rückenlehnenfester Gegenanschlag für den Klapptisch ausreichend wäre. Dieser fordert aber eine Änderung des Tischklappmechanismus, so daß für Sitze mit und ohne Neigungsverstellung der Rückenlehne zwei verschiedene Klapptischkonstruktionen vorgehalten werden müssen.

Der Erfindung liegt die Aufgabe zugrunde, bei einem Fahrzeugsitz der eingangs genannten Art die Klapptischkonstruktion so zu gestalten, daß einerseits der Klapptisch in seiner Gebrauchs- und Nichtgebrauchslage automatisch und ohne die Notwendigkeit, zusätzliche Verriegelungsmechanismen zu betätigen, zuverlässig gehalten ist und erst nach Aufbringen einer gewissen Schwenkkraft aus seinen beiden Lagen wieder ausgeschwenkt werden kann, und daß dabei andererseits ein Baukastenprinzip verwirklicht wird, das sicherstellt, daß bei Fahrzeugsitzen ohne und mit Neigungsverstellung der Rückenlehne die gleiche Tischkonstruktion eingesetzt werden kann, die im ersten Fall die technisch einfachste Grundversion mit den unbedingt notwendigen Konstruktionselementen darstellt, und im zweiten Fall durch Ergänzung mit weiteren Konstruktionselementen auch die durch die veränderbare Neigung der Rückenlehne an die Tischkonstruktion gestellten Anforderungen erfüllt.

Die Aufgabe durch die Merkmale des Anspruchs 1 gelöst.

Bei dem erfindungsgemäßen Fahrzeugsitz wird der Klapptisch in seiner Nichtgebrauchslage durch die stirnseitig auf den Rasthebel wirkende Rastfeder gerastet. Bei Aufklappen des Klapptisches wird der Rasthebel nach Aufbringen einer gewissen Schwenkkraft am Klapptisch entrastet und überschreitet den Totpunkt der Rastfeder, die nunmehr ein Drehmoment auf den Rasthebel ausübt, das den Rasthebel in Richtung eines in seinem Schwenkweg befindlichen Anschlags belastet. Dieser rückenlehnenfeste Anschlag ist so festgelegt, daß bei Anlage des Rasthebels an dem Anschlag die Tischfläche des Klapptisches waagerecht liegt, und zwar einerseits im Falle des Fahrzeugsitzes mit fester Rückenlehne und andererseits im Falle des Fahrzeugsitzes mit neigungsverstellbarer Rückenlehne, wenn diese ihre steilste Stellung einnimmt, also der Neigungswinkel der Rückenlehne zur Vertikalen am kleinsten ist, was der Rückenlehnenstellung beim Fahrzeugsitz mit fester Rückenlehne entspricht.

In der Gebrauchslage des Klapptisches wird der Rasthebel kraftschlüssig gegen den Anschlag gedrückt, so daß der Klapptisch gegen ungewollt an der Tischunterseite angreifende Kräfte, wenn diese nur stoßhaft auftreten oder ein Maximum nicht übersteigen, gesichert ist. Erst das Aufbringen eines das Drehmoment der Rastfeder übersteigenden Drehmoments am Klapptisch in Gegenrichtung, z.B. durch ein bewußtes Anheben der vorderen Tischkante, schwenkt den Klapptisch aus seiner Gebrauchslage und überführt ihn in seine an der Rückenlehne angeklappte Nichtgebrauchslage, wo er wiederum durch Einrasten in den Rastpunkt der Rastfeder ohne weitere Sicherungsmaßnahme gehalten wird.

Die erfindungsgemäße Tischkonstruktion ist sehr einfach und umfaßt in ihrer Grundversion für den Fahrzeugsitz mit fester Rückenlehne nur den Rasthebel, die Rastfeder und den rückenlehnenfesten Anschlag. Letzterer wird gemäß einer bevorzugten Ausführungsform der Erfindung von der Schlitzoberkante eines den Durchtritt des Rasthebels ermöglichenden Schlitzes in der steifen Rückenwand der Rückenlehne gebildet, so daß keine besonderen Konstruktionsmaßnahmen für den Anschlag vorgesehen werden müssen. Der Rückwandschlitz dient gleichzeitig zur Halterung der Rastfeder, die in geeigneter Weise ausgebildet und im Schlitzbereich in die Rückwand eingehängt ist.

Bei dem Einsatz dieser Grundversion der Tischkonstruktion in einem Fahrzeugsitz mit in der Neigung einstellbarer Rückenlehne werden zu dieser Grundversion weitere Konstruktionselemente hinzugefügt, um auch der Forderung zu genügen, daß die Tischfläche des Klapptisches unabhängig von der momentanen Neigung der Rückenlehne immer annähernd horizontal sein muß.

In einer einfachsten Erweiterung dieser Grundversion nach einem Baukastenprinzip kann hier im Schwenkweg des Rasthebels eine Rasterung vorgesehen werden, mittels welcher der Klapptisch manuell in die jeweils horizontale Lage eingeschwenkt werden kann.

In einer eine technisch komfortablere Lösung darstellenden bevorzugten Ausführungsform der Erfindung wird hingegen eine an die Rückenlehnenneigung angekoppelte automatische Einstellung des Klapptisches dadurch realisiert, daß der Rasthebel über ein Hebelgestänge mit dem Sitzkissen gekoppelt ist, daß ein rückenlehnenfester Steuernocken so angeordnet ist, daß er bei in Gebrauchslage befindlichem Klapptisch mit dem Hebelgestänge in Eingriff ist und über dieses bei Vergrößerung des Öffnungswinkels zwischen Sitzkissen und Rückenlehne den Rasthebel gegen das Drehmoment der Rastfeder so verstellt, daß die Tischfläche im wesentlichen unverändert ausgerichtet bleibt. Der Rasthebel hebt dabei gegen die Rückstellkraft der Rastfeder von seinem rückenlehnenfesten Anschlag ab, und der Klapptisch wird soweit aufgerichtet.

Beim Zurückschwenken der Rückenlehnen nach vorn, also bei Verkleinerung des Öffnungswinkels zwischen Sitzkissen und Rücklehne, bzw. des Neigungswinkels der Rücklehne gegen die Vertikale, entfernt sich der Steuernocken von dem Hebelgestänge und gibt dieses frei, wodurch der Rasthebel von der Rastfeder wieder in Richtung Anschlag gedreht wird, bis das Hebelgestänge wieder an dem Steuernocken anliegt. Der Klapptisch wird dabei soweit abgesenkt, daß in der steileren Stellung der Rückenlehne seine Tischfläche wiederum horizontal ausgerichtet ist. Somit bewirken im Wechselspiel der rückenlehnenfeste Steuernocken einerseits und die Rastfeder andererseits je nach Bewegungsrichtung der Rücklehnen das Nachführen des Klapptisches.

Bei dieser Ausführungsform der Klapptischkonstruktion bleibt die beim Fahrzeugsitz mit fester Rückenlehne verwendete Grundversion unverändert und wird nur noch um die Konstruktionselemente rückenlehnenfester Steuernocken und Hebelgestänge erweitert, so daß hier ein echtes Baukastensystem geschaffen ist, bei welchen mit einem Mindestaufwand an Konstruktionselementen die jeweils zu erfüllende Funktion durch Hinzufügen und Weglassen von Konstruktionselementen erreicht wird.

Weitere vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Die Erfindung ist anhand eines in der Zeichnung dargestellten Ausführungsbeispiels im folgenden näher beschrieben. Es zeigen:
- Fig. 1 und 2: jeweils eine Seitenansicht eines Fahrzeugsitzes mit neigungsverstellbarer Rückenlehne und an der Rückenlehne angeordnetem Klapptisch in zwei verschiedenen Neigungspositionen der Rückenlehne, jeweils schematisch dargestellt,
- Fig. 3: ausschnittweise eine Rückansicht der Rückenlehne bei angeklapptem Klapptisch,
- Fig. 4: eine vergrößerte Darstellung des Längsschnittes gemäß Linie IV-IV in Fig. 3, wobei Fig. 4a den unteren Teil und Fig. 4b den oberen Teil des Längsschnittes darstellt,
- Fig. 5: eine perspektivische Darstellung einer Rastfeder in der Rückenlehne gemäß Fig. 4b, vergrößert dargestellt.

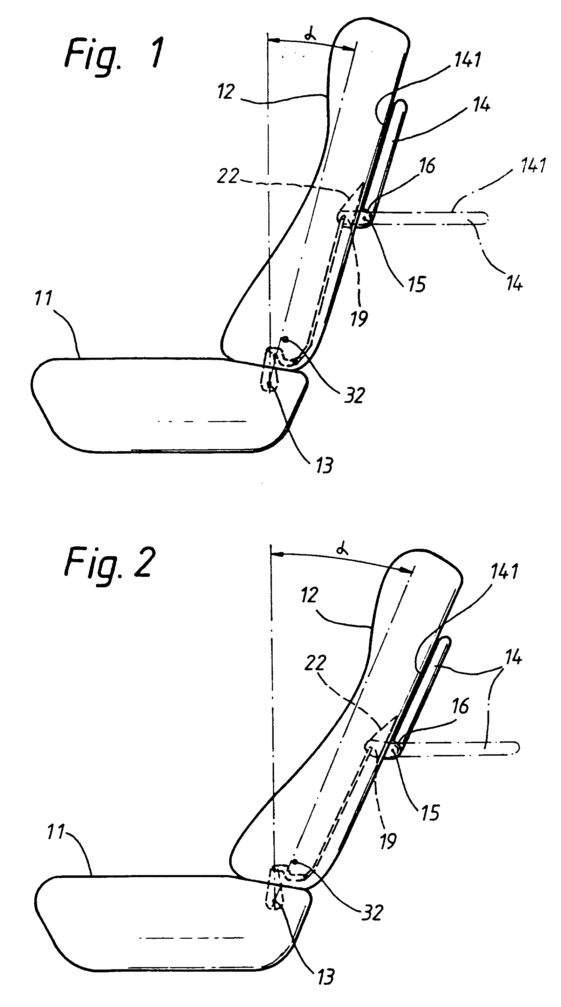

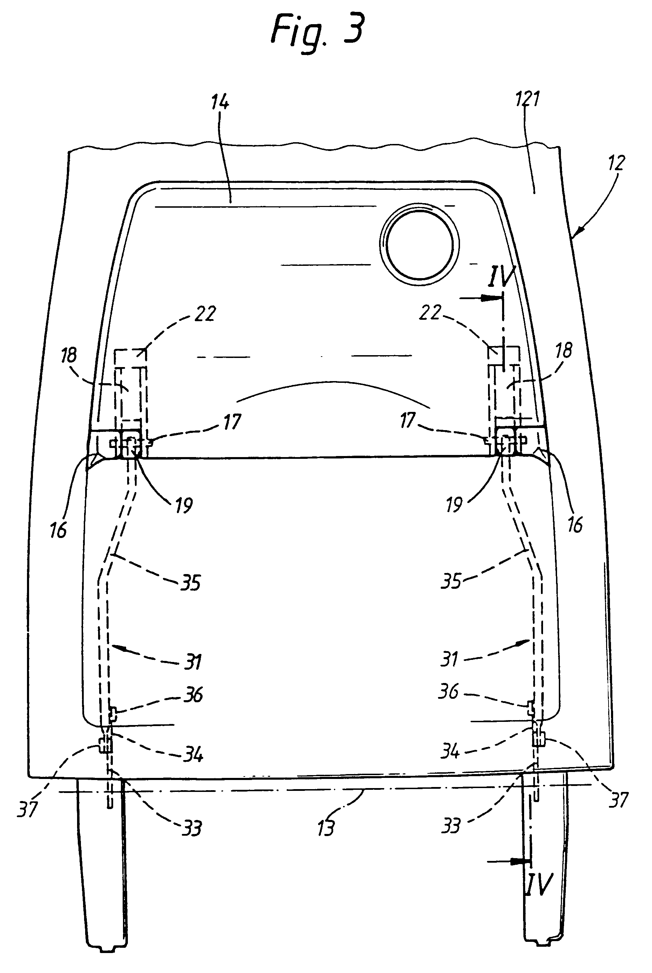

Der in Fig. 1 und 2 schematisch in Seitenansicht skizzierte Fahrzeugsitz weist ein Sitzkissen 11 und eine Rückenlehne 12 auf, die am Sitzkissen 11 schwenkbar gehalten ist, so daß der Öffnungswinkel zwischen Sitzkissen 11 und Rückenlehne 12, bzw. der Neigungwinkel α der Rückenlehne 12 gegen die Vertikale, entsprechend den individuellen Bedürfnissen des Sitzbenutzers eingestellt werden kann. Die mit 13 angedeutete Schwenkachse der Rückenlehne 12 ist am Sitzkissenunterrahmen oder an der Sitzschale ausgebildet. Die Rückenlehne 12 trägt auf ihrer Rückseite einen Klapptisch 14, der aus einer Nichtgebrauchslage (in Fig. 1 und 2 ausgezogen dargestellt), in welcher er mit seiner Tischfläche 141 an die Rückenlehne 12 angeklappt ist, in eine Gebrauchslage (in Fig. 1 und 2 strichpunktiert dargestellt) schwenkbar ist, in welcher seine Tischfläche 141 im wesentlichen horizontal liegt. Die mit 15 bezeichnete Schwenkachse des Klapptisches 14 ist an der Rückseite der Rückenlehne 12 festgelegt und verläuft parallel zur Rückenlehne 12 in horizontaler Richtung. Wie aus Fig. 1 und 2 in Verbindung mit der in Fig. 3 ausschnittweise dargestellten Rückansicht der Rückenlehne 12 hervorgeht, sind an der steifen Rückwand 121 im Abstand voneinander zwei senkrecht nach hinten abstehende Traglaschen 16 angeordnet, mit welchen der Klapptisch 14 über mit 17 angedeutete Bolzen drehbar verbunden ist. Die Bolzen 17 bilden die Schwenkachse 15 des Klapptisches 14.

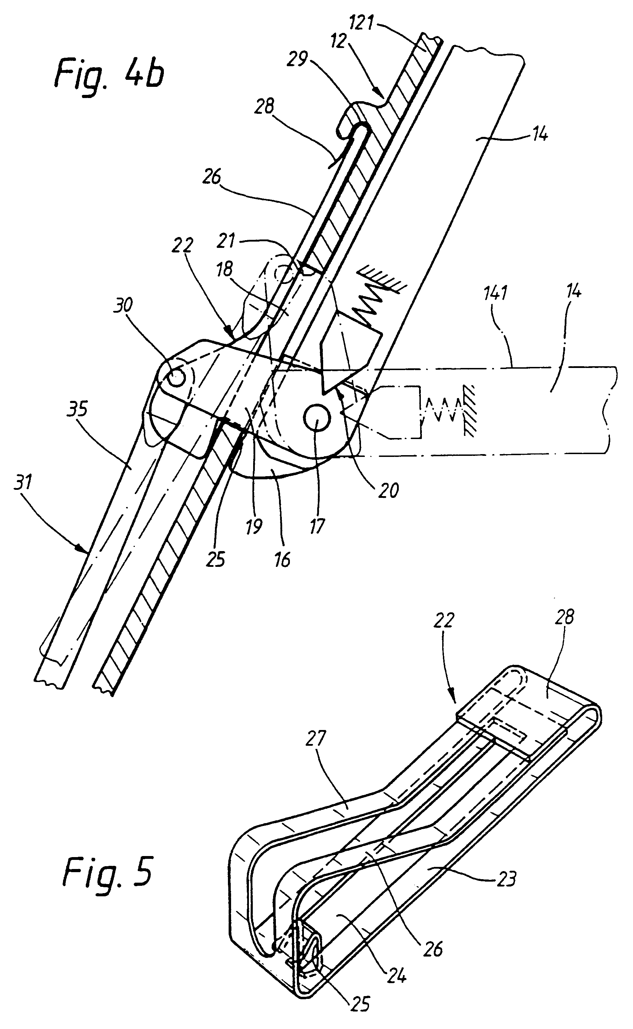

Unmittelbar neben den beiden Traglaschen 16 ist in der Rückwand 121 der Rückenlehne 12 jeweils ein Schlitz 18 vorgesehen, durch welchen jeweils ein Rasthebel 19 hindurchtritt. In Fig. 1 und 2 ist einer der Rasthebel 19 schematisch angedeutet, während in der Schnittdarstellung gemäß Fig. 4b der Rasthebel 19 in seiner konstruktiven Ausführung zu sehen ist. Die beiden Rasthebel 19 sind um die Schwenkachse 15 des Klapptisches 14 drehbar und sitzen hierzu auf dem Bolzen 17. Mittels einer in Fig. 4b schematisch angedeuteten Überlastkupplung 20 ist eine drehsteife Verbindung zwischen den beiden Rasthebeln 19 und dem Klapptisch 14 hergestellt. Dabei streben die beiden Rasthebel 19 etwa rechtwinklig von dem Klapptisch 14 ab und liegen an der Unterkante der Schlitze 18 in der Rückwand 121 an, wenn der Klapptisch 14 mit seiner Tischfläche 141 an die Rückenlehne 12 angeklappt ist, sich also in seiner Nichtgebrauchslage befindet (in Fig. 4b ist der in seiner Nichtgebrauchslage sich befindliche Klapptisch 14 ausgezogen dargestellt). Die Länge der Rasthebel 19 und die Längsabmessung der beiden Schlitze 18 sind so aufeinander abgestimmt, daß die Rasthebel 19 an der einen Anschlag 21 bildenden Oberkante des Schlitzes 18 anliegen, wenn der Klapptisch 14 in seine Gebrauchslage überführt ist (in Fig. 1,2 und 4b strichpunktiert angedeutet). Befindet sich zusätzlich die Rückenlehne 12 in einer Stellung, in welcher der Neigungswinkel α minimal ist, d.h. die Rückenlehne 12 maximal aufgerichtet ist, so ist die Tischfläche 141 des Klapptisches 14 exakt horizontal ausgerichtet. Die beiden Überlastkupplungen 20 zwischen dem Klapptisch 14 und den beiden Rasthebeln 19 können in bekannter Weise ausgeführt werden. Sie haben die Aufgabe, die drehfeste Verbindung zwischen den Rasthebeln 19 und dem Klapptisch 14 aufzuheben, wenn eine auf die Tischfläche 141 nach unten wirkende Kraft ein vorgegebenes Maximum überschreitet. Dann geben die Überlastkupplungen 20 den Klapptisch 14 frei und dieser kann nach unten wegschwenken.

Zur Verriegelung des Klapptisches 14 in seiner Nichtgebrauchslage und in seiner Gebrauchslage ist eine Rastfeder 22 vorgesehen, die in der Rückenlehne 12 gehalten ist und das freie Ende des Rasthebels 19 beaufschlagt. Die Rastfeder 22 ist in Fig. 5 perspektivisch dargestellt. Sie weist ein ebenes Federblatt 23 mit einer Durchtrittsöffnung 24 für den Rasthebel 19 auf. Von der unteren Kante der Durchtrittsöffnung 24 ist ein Haken 25 auf die Rückseite des Federblattes 23 ausgebogen, der so ausgebildet ist, daß er die Unterkante des Schlitzes 18 in der Rückwand 121 der Rückenlehne 12 zu übergreifen vermag. Auf der gegenüberliegenden Vorderseite des Federblatts 23 stehen am unteren Federende aus der Federblattebene zwei Federschenkel 26,27 etwa rechtwinklig vor, die bogenförmig umgebogen sind und mit ihren freien Schenkelenden am oberen Federende in die Federblattebene zurückgeführt sind. Die freien Enden der Federschenkel 26,27 werden am oberen Federende von einer Lasche 28 übergriffen, die vom Federblatt 23 ausgebogen und um etwa 180° auf die Vorderseite des Federblattes 23 umgebogen ist. Wie in Fig. 3 und 4b zu sehen ist, ist jeweils eine solchermaßen ausgebildete Rastfeder 22 im Bereich der beiden Schlitze 18 rückwandseitig der Rückenlehne 12 so auf die Rückwand 121 aufgesetzt, daß die Durchtrittsöffnungen 24 die Schlitze 18 freigeben. Hierzu ist oberhalb der Oberkante der Schlitze 18 an der Rückwand 121 eine Tasche 29 ausgebildet, in welche das obere Federende mit der hakenartig umgebogenen Lasche 28 eingeschoben ist. Der Haken 25 an der Unterkante der Durchtrittsöffnung 24 greift durch den Schlitz 18 hindurch und übergreift die Unterkante des Schlitzes 18. Dies ist aus Fig. 4b ersichtlich.

Wie weiter aus Fig. 4b zu sehen ist, liegen die beiden Federschenkel 26,27 unter Federvorspannung auf beidseitig aus dem Rasthebel seitlich vorstehenden Bolzenenden eines in jedem Rasthebel 19 endseitig gehaltenen Bolzens 30 auf. Die Ausbildung der Rastfeder 22 und die Zuordnung von Klapptisch 14 und Rasthebel 19 ist so getroffen, daß der Klapptisch 14 in seiner Nichtgebrauchslage durch die Rastfeder 22 gerastet ist (vergl. ausgezogen dargestellte Stellung des Rasthebels 19 in Fig 4b). Wird nunmehr der Klapptisch 14 aufgeklappt, also in seine Gebrauchslage überführt, so wird der Rasthebel 19 entrastet und überschreitet den Totpunkt der Rastfeder 22. Mit Überschreiten des Totpunktes erzeugen die beiden Federschenkel 26,27 über den Bolzen 30 ein permanentes Drehmoment auf den Rasthebel 19, das diesen in Richtung auf den von der Oberkante des Schlitzes 18 gebildeten Anschlag 21 zu drehen sucht. Liegt der Rasthebel 19 an seinem rückenlehnenfesten Anschlag 21 an, so wirkt noch eine Federrestkraft, die den Rasthebel 19 kraftschlüssig gegen den Anschlag 21 drückt. Damit wird der Klapptisch 14 gegen ungewollt an der Tischunterseite angreifende Kräfte ausreichend gesichert, wenn diese nur stoßhaft auftreten oder ein gewisses Maximum nicht übersteigen. Zum Zurückklappen des Klapptisches 14 in seine Nichtgebrauchslage ist der Klapptisch 14 an seiner Vorderkante anzuheben, wobei das von der Rastfeder 22 in Gegenrichtung aufgebrachte Drehmoment zu überwinden ist. Der Rasthebel 19 schwenkt dabei wieder in Richtung Unterkante des Schlitzes 18 und fällt am unteren Ende der Rastfeder 22 in die Rastposition ein. Damit ist der Klapptisch 14 in seiner Nichtgebrauchslage an der Rückseite der Rücklehne 19 automatisch verrastet, ohne daß von Hand eine zusätzliche Sicherungsmaßnahme eingeleitet werden muß.

Die vorstehend beschriebene Tischkonstruktion würde ausreichen für einen Fahrzeugsitz, dessen Rückenlehne 12 fest am Sitzkissen 11 befestigt ist, also keine Möglichkeit der Einstellung des Neigungswinkels α für die Rückenlehne 12 hat. Die Rückenlehne 12 hat dabei eine feste Aufrichtung, die der maximalen Aufrichtung, also dem kleinsten Neigungswinkel α der Rückenlehne 12 gegen die Vertikale, bei einem Fahrzeugsitz mit Neigungseinstellmöglichkeit der Rückenlehne 12 entspricht. Wie vorstehend bereits erwähnt, ist bei einer solchen maximalen Aufrichtung der Rückenlehne 12 die Tischfläche 141 horizontal ausgerichtet, wenn in der Gebrauchslage des Klapptisches 14 die beiden Rasthebel 19 gegen ihren jeweiligen Anschlag 21 an der Oberkante der Schlitze 18 in der Rückwand 121 der Rückenlehne 12 anliegen (vergl. Fig. 4b strichpunktierte Darstellung von Rasthebel 19 und Klapptisch 14).

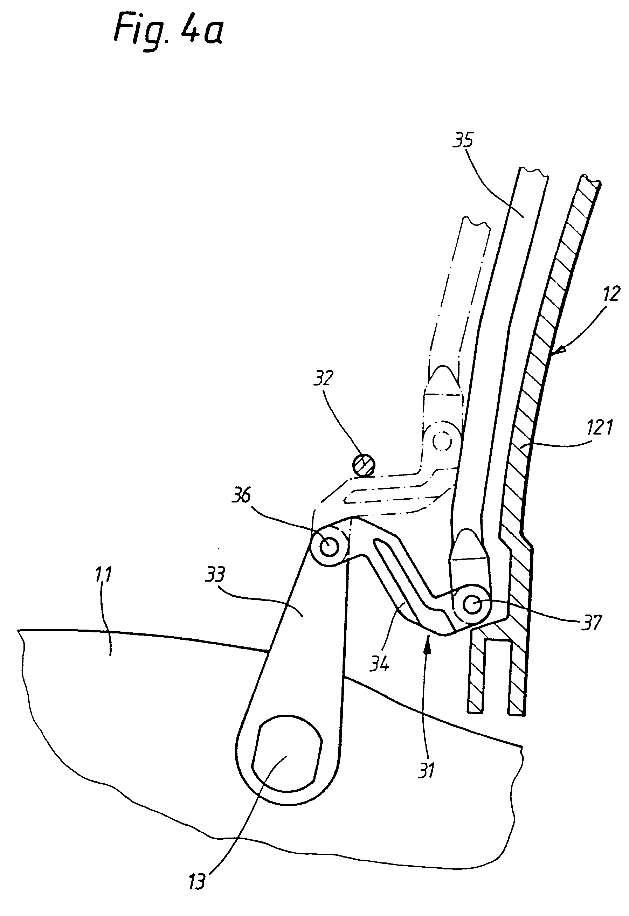

Bei einem Fahrzeugsitz, bei welchem die Rückenlehne 12 in ihrer Neigung veränderbar ist, ist es erforderlich, den Klapptisch 14 bei unterschiedlichen Neigungswinkeln α der Rückenlehne 12 immer so einzustellen, daß die Tischfläche 141 horizontal ausgerichtet bleibt. Hierzu ist jeder Rasthebel 19 über ein Hebelgestänge 31 an dem Sitzkissen 11 angekoppelt, und in der Rückenlehne 12 ist ein Steuernocken 32 in Zuordnung zu dem Hebelgestänge 31 fest derart angeordnet, daß er bei in Gebrauchslage befindlichem Klapptisch 14 am Hebelgestänge 31 anliegt und über dieses bei Vergrößerung des Neigungswinkels α den Rasthebel 19 gegen das Drehmoment der Rastfeder 22 so verstellt, daß die Tischfläche 141 waagerecht bleibt. In Fig. 4a und 4b ist Lage des Hebelgestänges 31 in der Nichtgebrauchslage des Klapptisches 14 ausgezogen und in der abgeklappten Gebrauchslage des Klapptisches 14 strichpunktiert dargestellt. Im einzelnen weist jedes Hebelgestänge 31 einen am Sitzkissen 11 drehfest gehaltenen ersten Hebel 33, einen an dem ersten Hebel 33 angelenkten zweiten Hebel 34 und eine Koppelstange 35 auf, die über je einen Gelenkpunkt mit dem zweiten Hebel 34 und dem Rasthebel 19 verbunden ist. Der erste Hebel 33 ist so am Sitzkissen 11, hier im Drehpunkt der Rückenlehne 12, gehalten und ausgerichtet, daß der Gelenkpunkt 36 zwischen erstem und zweitem Hebel 33,34 etwa vertikal oberhalb der Schwenkachse 13 der Rückenlehne 12 liegt. Der Gelenkpunkt zwischen zweitem Hebel 34 und Koppelstange 35 ist mit 37 bezeichnet, und der Gelenkpunkt zwischen Koppelstange 35 und dem Rasthebel 19 wird von dem Bolzen 30 gebildet.

Befindet sich der Klapptisch 14 in seiner Nichtgebrauchslage, so liegt jeder Rasthebel 19 an der Unterkante des Schlitzes 18 an und ist im unteren Teil der Rastfeder 22 verrastet (in Fig. 4b ausgezogen dargestellt). Über die Koppelstange 35 ist der zweite Hebel 34 nach unten geschwenkt und liegt mit Abstand vor dem Steuernocken 32. Wird der Klapptisch 14 von Hand abgeklappt, so schwenken die Rasthebel 19 um die Bolzen 17 nach oben, bis sie mit ihren Enden am Anschlag 21 anliegen, gegen den sie von den Federschenkeln 26,27 der beiden Rastfedern 22 angedrückt werden (in Fig. 4b strichpunktiert dargestellt). Bei dieser Schwenkbewegung der Rasthebel 19 wird jeweils die Koppelstange 35 der beiden Hebelgestänge 31 mitgenommen, die wiederum den zweiten Hebel 34 um seinen Gelenkpunkt 36 am ersten Hebel 33 schwenkt, wodurch dieser vorspannungslos an dem Steuernocken 32 anliegt (in Fig. 4a strichpunktiert dargestellt). Diese Lage nehmen Rasthebel 19, Koppelstange 35 und zweiter Hebel 34 immer ein, wenn die Rückenlehne 12 maximal aufgerichtet ist, d.h. der Neigungswinkel α kleinstmöglich eingestellt ist.

Wird die Rückenlehne 12 aus dieser Position nunmehr stärker geneigt, d.h. der Neigungswinkel α größer gemacht, so bewegt sich der Steuernocken 32 auf einer Kreisbahn um die Schwenkachse 13 und drückt dabei auf den zweiten Hebel 34, der dadurch um seinen Gelenkpunkt 36 am ersten Hebel 33 gedreht wird. Der schwenkende Hebel 34 zieht die Koppelstange 35 nach unten, und die Koppelstange 35 schwenkt dadurch den Rasthebel 19 weg von seinem Anschlag 21. Der nach unten schwenkende Rasthebel 19 richtet den Klapptisch 14 soweit hoch, daß dessen Tischfläche 141 wieder horizontal ausgerichtet ist. Insgesamt wird somit von dem Steuernocken 32 der Rasthebel 19 in Abhängigkeit von dem Neigungswinkel α der Rückenlehne 12 soweit gedreht, daß bei allen Neigungswinkeln α der Rückenlehne 12 die Tischfläche 141 des Klapptisches 114 immer horizontal liegt.

Wird nunmehr die Rückenlehne 12 wieder aufgerichtet, also der Neigungswinkel α verkleinert, so entfernt sich der Steuernocken 32 auf einer Kreisbahn von dem zweiten Hebel 34. Damit wird der zweite Hebel 34 freigegeben, und die Federkraft der Rastfedern 22 dreht den Rasthebel 19 aufwärts in Richtung zu seinen oberen Anschlag 21 an der Rückwand 121. Durch den zurückschwenkenden Rasthebel 19 wird über die Koppelstange 35 der zweite Rasthebel 34 um seinen Gelenkpunkt 36 dem zurückweichenden Steuernocken 32 nachgeführt, so daß der zweite Hebel 34 immer in Anlage an dem Steuernocken 32 bleibt. Mit dem Schwenken des Rasthebels 19 nach oben wird der Klapptisch 14 wieder abwärts geschwenkt, und zwar um einen solchen Betrag, daß seine Tischfläche 141 in der jeweiligen Stellung der Rückenlehne 12 mit dem Neigungswinkel α immer horizontal ausgerichtet ist.

Die Erfindung ist nicht auf das vorstehend beschriebene Ausführungsbeispiel beschränkt. So kann in einer konstruktiv vereinfachten, in der Handhabung weniger komfortablen Version bei einem Fahrzeugsitz mit in der Neigung verstellbarer Rückenlehne 12 das am Rasthebel 19 angreifende Hebelgestänge 31 entfallen und statt dessen im Schwenkweg des Rasthebels 19 entlang den Federschenkeln 26,27 der Rastfeder 22 eine Rasterung vorgesehen werden. Je nach eingestelltem Neigungswinkel α der Rückenlehne 12 muß dann der Klapptisch 14 von Hand so in der Rasterung verstellt werden, daß die Tischfläche 141 des Klapptisches 14 jeweils horizontal verläuft.

Bei Fahrzeugsitzen mit fester, d.h. in der Neigung nicht verstellbarer Rückenlehne 12 entfällt das Hebelgestänge 31 und der Steuernocken 32. Ansonsten bleibt die beschriebene Tischkonstruktion unverändert.

## Patentansprüche

1. Fahrzeugsitz mit Sitzkissen (11) und Rückenlehne (12) und mit einem auf der Rückseite der Rückenlehne angeordneten Klapptisch (14), der aus einer Nichtgebrauchslage, in welcher er mit seiner Tischfläche (141) an die Rückenlehne (12) angeklappt ist, um eine zur Rückenlehne (12) parallele, waagerechte Schwenkachse (15) in eine Gebrauchslage schwenkbar ist, in welcher seine Tischfläche (141) im wesentlichen horizontal liegt,
**dadurch gekennzeichnet,**
daß von dem Klapptisch (14) mindestens ein drehfest mit diesem verbundener Rasthebel (19) über die Schwenkachse (15) ins Innere der Rückenlehne (12) hinein vorsteht, daß eine in der Rückenlehne (12) gehaltene Rastfeder (22) den Rasthebel (19) an dessen freiem Ende derart beaufschlagt, daß auf diesen in der Nichtgebrauchslage des Klapptisches (14) ein Rastmoment und außerhalb der Nichtgebrauchslage des Klapptisches (14) ein zu einem im Schwenkweg des Rasthebels (19) angeordneten Anschlag (21) hin gerichtetes, den Klapptisch (14) in Gebrauchslage drehendes Drehmoment ausgeübt wird, und daß die Zuordnung von Klapptisch (14), Rasthebel (19) und Anschlag (21) so getroffen ist, daß bei kleinstem Öffnungswinkel zwischen Sitzkissen (11) und Rückenlehne (12) bzw. kleinstem Neigungswinkel (α) der Rückenlehne (12) zur Vertikalen die Tischfläche (141) im wesentlichen horizontal ausgerichtet ist, wenn der Rasthebel (19) am Anschlag (21) anliegt.

2. Sitz nach Anspruch 1,
**dadurch gekennzeichnet,**
daß die Rückenlehne (12) eine steife Rückwand (121) aufweist, in welcher mindestens ein Schlitz (18) zum Durchtritt des mindestens einen Rasthebels (19) vorgesehen ist, daß die Rastfeder (22) am Schlitz (18) gehalten ist und zwei parallele Federschenkel (26,27) aufweist, die unter Federvorspannung auf beidseitig aus dem Rasthebel (19) seitlich vorspringenden Bolzenenden eines im Rasthebel (19) endseitig gehaltenen Bolzens (17) aufliegen.

3. Sitz nach Anspruch 2,
**dadurch gekennzeichnet,**
daß die Rastfeder (22) ein Federblatt (23) mit einer zentralen Durchtrittsöffnung (24) für den Rasthebel (19) aufweist, daß die Federschenkel (26,27) am unteren Federende etwa rechtwinklig aus der Federblattebene vorstehen und bogenförmig zum oberen Federende hin in die Federblattebene zurückgeführt sind und daß die freien Schenkelenden der beiden Federschenkel (26,27) am oberen Federende von einer aus der Federblattebene ausgebogenen, hakenartigen Lasche (28) gegen Abspreizung übergriffen sind.

4. Sitz nach Anspruch 2 oder 3,
**dadurch gekennzeichnet,**
daß die Rastfeder (22) mit ihrem Federblatt (23) auf der Rückwand (121) der Rückenlehne (12) so aufliegt, daß ihre Durchtrittsöffnung (24) mit dem Rückwandschlitz (18) fluchtet, und dabei an ihrem oberen Ende in eine aus der Rückwand (121) ausgeformte Tasche (29) eingesetzt und an ihrem unteren Ende mittels eines dort ausgebildeten, die Unterkante des Schlitzes (18) übergreifenden Hakens (25) in dem Schlitz (18) eingehängt ist.

5. Sitz nach einem der Ansprüche 2 - 4,
**dadurch gekennzeichnet,**
daß der rückenlehnenfeste Anschlag (21) für den Rasthebel (19) von der oberen Wandbegrenzung des Rückwandschlitzes (18) in der Rückenlehne (12) gebildet ist.

6. Sitz nach einem der Ansprüche 1 - 5,
**dadurch gekennzeichnet,**
daß der mindestens eine Rasthebel (19) auf der Schwenkachse (15) des Klapptisches (14) schwenkbar gelagert und die drehfeste Verbindung zwischen Klapptisch (14) und Rasthebel (19) durch eine Überlastkupplung (20) hergestellt ist.

7. Sitz nach einem der Ansprüche 1 - 6, bei welchem die Rückenlehne (12) am Sitzkissen (11) schwenkbar so gehalten ist, daß der kleinste Öffnungswinkel zwischen Sitzkissen (11) und Rückenlehne (12) bzw. Neigungswinkel (α) der Rückenlehne (12) gegen die Vertikale in Grenzen beliebig vergrößert werden kann,
**dadurch gekennzeichnet,**
daß der Rasthebel (19) über ein Hebelgestänge (31) mit dem Sitzkissen (11) gekoppelt ist, daß ein rückenlehnenfester Steuernocken (32) so angeordnet ist, daß er bei in Gebrauchslage befindlichem Klapptisch (14) mit dem Hebelgestänge (31) in Eingriff ist und über dieses bei Vergrößerung des Öffnungs- oder Neigungswinkels (α) den Rasthebel (19) gegen das Drehmoment der Rastfeder (22) so verstellt, daß die Tischfläche (141) des Klapptisches (14) im wesentlichen unverändert horizontal ausgerichtet bleibt.

8. Sitz nach Anspruch 7,
**dadurch gekennzeichnet,**
daß das Hebelgestänge (31) einen am Sitzkissen (11) drehfest gehaltenen ersten Hebel (33), einen am ersten Hebel (33) oberhalb der sitzkissenfesten Rückenlehnen-Schwenkachse (13) angekoppelten zweiten Hebel (34) und eine den zweiten Hebel (34) mit dem Rasthebel (19) verbindende, an jedem der Hebel (34,19) schwenkbeweglich befestigte Koppelstange (35) aufweist und daß die Zuordnung von rückenlehnenfestem Steuernocken (32) und Hebelgestänge (31) so getroffen ist, daß bei kleinstem Öffnungswinkel zwischen Sitzkissen (11) und Rückenlehne (12) bzw. bei kleinstem Neigungswinkel (α) der Rückenlehne (12) gegen die Vertikale der zweite Hebel (34) vorspannungslos gegen den Steuernocken (32) schwenkt, wenn in der Gebrauchslage des Klapptisches (14) der Rasthebel (19) am rückenlehnenfesten Anschlag (21) zur Anlage kommt.

9. Sitz nach einem der Ansprüche 1 - 6, bei welchem die Rückenlehne (12) am Sitzkissen (11) schwenkbar so gehalten ist, daß der kleinste Öffnungswinkel zwischen Sitzkissen (11) und Rückenlehne (12) bzw. Neigungswinkel (α) zwischen Rückenlehne (12) gegen die Vertikale in Grenzen beliebig vergrößert werden kann,
**dadurch gekennzeichnet,**
daß im Schwenkbereich des freien Hebelendes des Rasthebels (19) eine Rasterung mit einer Mehrzahl von Rastpositionen für den Rasthebel (19) angeordnet ist.

10. Sitz nach einem der Ansprüche 1 - 9,
**dadurch gekennzeichnet,**
daß zwei im Querabstand voneinander angeordnete Rasthebel (19) vorgesehen sind.

## Claims

1. A vehicle seat with seat cushion (11) and seat back (12) and, mounted on the rear side of the seat back, a folding table (14), which, from an inoperative position, in which it is folded back with its table surface (141) on to the seat back (12), is pivotable around a horizontal pivot axis (15) parallel to the seat back (12) into an operative position in which its surface (141) lies substantially horizontally, characterized in that, from the folding table (14) at least one stop lever (19) connected solid in rotation with the table protrudes inwards over the pivot axis (15) into the inside of the seat back (12), in that a stop spring (22) held in the seat back (12) impinges the stop lever (19) at its free end in such a manner that a stop moment is exerted onto it in the inoperative position of the folding table, and out of the inoperative position of the folding table (14) a torque is exerted directed towards a stop (21) mounted in the pivoting path of the stop lever (19) rotating the folding table (14) into the operative position, and in that the mutual association of folding table (14), stop lever (19) and stop (21) is so desgigned that with the smallest angle of opening between the seat cushion (11) and the seat back (12) or the smallest angle of inclination (α) of the seat back (12) to the vertical the table surface (141) is substantially horizontally directed when the stop lever (19) abuts on the stop (21).

2. A seat according to claim 1, characterized in that the seat back (12) has a rigid rear wall (121) in which there is provided at least one slot (18) for the passage of the at least one stop lever (19), in that the stop spring (22) is held on the slot (18) and has two parallel spring legs (26,27) which lie under spring tension on bolt ends , projecting laterally on both sides out of the stop lever (19), of a bolt (17) held at the end in the stop lever (19).

3. A seat according to claim 2, characterized in that the stop spring (22) has a spring leaf (23) with a central passage opening (24) for the stop lever (19), in that the spring legs (26, 27) at the lower spring end protrude substantially at right angles out of the spring leaf plane and are returned arc-wise towards the upper spring end into the spring leaf plane, and in that the free leg ends of the two spring legs (26, 27) at the upper spring end are overlapped against expansion by a hook-shaped shackle (28) bent out of the spring leaf plane.

4. A seat according to claim 2 or 3, characterized in that the stop spring (22) with its spring leaf (23) applies on the rear wall (121) of the seat back (12) in such a manner that its passage opening (24) is aligned on the slot (18) in the rear wall, and in this arrangement is set at its upper end into a pocket (29) shaped out of the rear wall (121) and is hung , at its loner end by means of a hook (25) formed there, overlapping the underside of the slot (18), in the slot (18).

5. A seat according to one of claims 2 to 4, characterized in that the stop (21) rigidly connected with the seat back for the stop lever (19) is formed by the upper wall limitation of the rear wall slot (18) in the seat back (12).

6. A seat according to one of claims 1 to 5, characterized in that the at least one stop lever (19) is rotatably mounted on the pivot axis (15) of the folding table (14), and the connection solid in rotation between the folding table (14) and the stop lever (19) is effected by means of an overload coupling (20).

7. A seat according to one of claims 1 to 8, wherein the seat back (12) is rotatably held on the seat cushion (11) in such a manner that the smallest angle of opening between the seat cushion (11) and the seat back (12), or the angle of inclination (α) of the seat back (12) with respect to the vertical may be increased at will within specific limits, characterized in that the stop lever (19) is connected by means of a levergear (31) with the seat cushion (11), in that a control cam (32) rigidly connected with the seat back is so arranged that, when the folding table (14) is in the operative position, it engages with the lever gear (31) and by means of the latter, on the increasing of the opening angle or angle of inclination (α) it sets the stop lever (19) relative to the torque of the stop spring (22) in such a manner that the surface (141) of the folding table (14) remains substantially unaltered horizontally directed.

8. A seat according to claim 7, characterized in that the lever system (31) comprises a first lever (33) held on the seat cushion (11) solid in rotation, a second lever (34) coupled with the first lever (33) above the seat back pivot axis (13) rigidly connected with the seat cushion, and a coupling bar (35) connecting the second lever (34) with the stop lever (19) and pivotally connected to each lever (34, 19), and in that the association of the control cam (32) and lever system (31) is so designed that, on the slightest angle of opening between the seat cushion (11) and the seat back (12), or on the slightest angle of inclination (α) of the seat back (12) relative to the vertical the second lever (34) pivots without tension against the control cam (32) when, in the operative position of the folding table (14) the stop lever (19) comes to apply on the stop (21) rigidly connected with the seat back (21).

9. A seat according to one of claims 1 to 6, wherein the seat back (12) is pivotally held on the seat cushion (11) in such a manner that the smallest angle of opening between the seat cushion (11) and the seat back (12) or angle of inclination (α) of the seat back to the vertical may be increased at will within specific limits, characterized in that in the pivoting area of the free lever end of the stop lever (19) a stop arrangement is provided with a plurality of stop positions for the stop lever (19).

10. A seat according to one of claims 1 to 9, characterized in that two stop levers (19) are provided, situated at a transverse distance to each other.

## Revendications

1. Siège de véhicule comprenant un coussin (11) pour s'asseoir et un dossier (12), ainsi qu'une table rabattable (14) disposée au dos du dossier et pouvant pivoter autour d'un axe horizontal de pivotement (15) parallèle au dossier (12) d'une position de non utilisation à laquelle la surface de sa table (141) est rabattue contre le dossier (12) à une position d'utilisation à laquelle sa surface de table (141) est sensiblement horizontale,
caractérisé
en ce qu'au moins un levier à crans (19) solidarisé avec la table rabattable (14) déborde de cette dernière au-delà de l'axe de pivotement (15) vers l'intérieur du dossier (12), en ce qu'un ressort à cran d'arrêt (22) monté dans le dossier (12) exerce sur l'extrémité libre du levier à crans (19) une force telle qu'un moment de verrouillage du cran s exerce sur celui-ci lorsque la table rabattable (14) est en position de non utilisation et que, en dehors de la position de non utilisation de la table rabattable (14), un couple de rotation orienté vers une butée (21) disposée dans la course de pivotement du levier à crans (19) et faisant tourner la table rabattable (14) pour la mette en position d'utilisation soit exercé et en ce que la disposition réciproque de la table rabattable (14), du levier à crans (19) et de la butée (21) est conçue de manière que lorsque l'angle d'ouverture entre le coussin (11) pour s'asseoir et le dossier (12) ou l'angle d'inclinaison (α) du dossier (12) sur la verticale est le plus petit, la surface de la table (141) soit orientée à peu près horizontalement lorsque le levier à crans (19) est en appui contre la butée (21).

2. Siège selon la revendication 1,
caractérisé
en ce que le dossier (12) comprend une paroi arrière rigide (121) dans laquelle au moins une fente (18) est prévue pour le passage de l'au moins un levier à crans (19), en ce que le ressort à cran d'arrêt (22) est monté dans la fente (18) et comprend deux branches parallèles (26, 27) qui reposent sous précontrainte élastique sur les extrémités d'une tige (17) montée à l'extrémité du levier à crans (19) qui sont saillantes latéralement des deux côtés sur le leviers à crans (19).

3. Siège selon la revendication 2,
caractérisé
en ce que le ressort à cran d'arrêt (22) comprend une lame de ressort (23) comportant un trou central (24) de passage du levier à crans (19), en ce que les branches du ressort (26, 27) sont saillantes à l'extrémité inférieure du ressort sensiblement à angle droit sur le plan de la lame de ressort et reviennent en arc vers l'extrémité supérieure du ressort dans le plan de la lame de ressort et en ce que les extrémités libres des deux branches du ressort (26, 27) sont chevauchées à l'extrémité supérieure du ressort par une plaquette en forme de crochet (28) repliée et rabattue vers le plan de la lame de ressort de manière à les empêcher de s'écarter.

4. Siège selon la revendication 2 ou 3,
caractérisé
en ce que la lame (23) du ressort à cran d'arrêt (22) repose contre la paroi arrière (121) du dossier (12) de manière que son trou de passage (24) soit à l'alignement de la fente (18) de la paroi arrière et de plus elle se loge à l'extrémité supérieure dans une poche (29) venue de moulage avec la paroi arrière (121) et saillante sur cette dernière et elle est suspendue à l'extrémité inférieure dans la fente (18) au moyen d'un crochet (25) réalisé en cet emplacement et chevauchant le bord inférieure de la fente (18).

5. Siège selon l'une des revendications 2-4,
caractérisé
en ce que la butée (21) solidaire du dossier et destinée au levier à crans (19) est formée du bord supérieur de la fente de la paroi arrière (18) située dans le dossier (12).

6. Siège selon l'une des revendications 1-5,
caractérisé
en ce que le au moins un levier à crans (19) est monté pivotant sur l'axe de pivotement (15) de la table rabattable (14) et la solidarisation en rotation entre la table rabattable (14) et le levier à crans (19) est réalisée par un dispositif d'accouplement à surcharge (20).

7. Siège selon l'une des revendications 1-6, dans lequel le dossier (12) est monté rabattable contre le coussin pour s'asseoir (11) de manière que l'angle d'ouverture le plus petit entre le coussin pour s'asseoir (11) et le dossier (12) ou que l'angle d'inclinaison le plus petit (α) du dossier (12) sur la verticale puisse être agrandi à volonté dans certaines limites,
caractérisé,
en ce que le levier à crans est relié par une tringlerie à leviers (31) au coussin pour s asseoir (11), en ce qu'un ergot de commande (32) solidaire du dossier est disposé de manière que, lorsque la table rabattable (14) se trouve en position d'utilisation, il entre en prise avec la tringlerie à leviers (31) et déplace au moyen de celle-ci le levier à crans (19) à l'encontre du couple de rotation du ressort à cran d'arrêt (19) lors de l'agrandissement de l'angle d'ouverture ou d'inclinaison (α) de manière que la surface (141) de la table rabattable (14) demeure orientée sensiblement sans changement horizontalement.

8. Siège selon la revendication 7,
caractérisé
en ce que la tringlerie à leviers (31) comprend un premier levier (33) solidarisé en rotation avec le coussin pour s'asseoir (11), un second levier (34) accouplé au premier levier (33) au-dessus de l'axe (13) de pivotement du dossier qui est fixé au coussin pour s'asseoir, ainsi qu'une barre d'accouplement (35) reliant le second levier (34) au levier à crans (19) et montée mobile en rotation sur chacun des leviers (34, 19) et en ce que la disposition réciproque de l'ergot de commande (32) solidaire du dossier et de la tringlerie à leviers (31) est conçue de manière que, lorsque l'angle d'ouverture entre le coussin pour s'asseoir (11) et le dossier (12) est le plus petit ou que l'angle d'inclinaison (α) du dossier (12) sur la verticale est le plus petit, le second levier (34) bascule librement contre l'ergot de commande (32) lorsque le levier à crans (19) entre en appui contre la butée (21) solidaire du dossier lorsque la table rabattable (14) est en position d'utilisation.

9. Siège selon l'une des revendications 1-6, dans lequel le dossier (12) est monté orientable sur le coussin pour s'asseoir (11) de manière que le plus petit angle d'ouverture entre le coussin pour s asseoir (11) et le dossier (12) ou le plus petit angle d'inclinaison (α) du dossier (12) sur la verticale puisse être agrandi à volonté dans certaines limites,
caractérisé
en ce qu'un crantage à plusieurs positions d'enclenchement du levier à crans (19) est disposé dans la zone de pivotement de l'extrémité libre du levier à crans (19).

10. Siège selon l'une des revendications 1-9,
caractérisé
en ce que deux leviers à crans (19) placés transversalement à distance l'un de l'autre sont prévus.
